# EUROPÄISCHE PATENTSCHRIFT

(11) **EP 1 703 620 B1**
(45) Veröffentlichungstag und Bekanntmachung des Hinweises auf die Patenterteilung: **31.05.2017**
(21) Anmeldenummer: 05024166.0
(22) Anmeldetag: 05.11.2005
(51) Int. Cl.: H02K 11/04, H02K 11/02, H02K 5/14, H02K 5/22, H02K 7/116, H02K 11/215, H02K 11/40, H02K 5/10, H02K 11/026

(54) **Elektrischer Antrieb**
Electric drive
Entraînement électrique

(30) Priorität: 18.03.2005 DE 102005012619
(43) Veröffentlichungstag der Anmeldung: 20.09.2006
(73) Patentinhaber: Bühler Motor GmbH, 90459 Nürnberg (DE)
(72) Erfinder: Guttenberger, Richard, 91171 Greding (DE)

(56) Entgegenhaltungen:
- DE-A1- 4 315 404
- DE-A1- 19 815 702
- GB-A- 2 140 218

## Beschreibung

Die Erfindung betrifft einen Elektrischen Antrieb (1), mit einem Motorgehäuse (16), einem Lagerschild (4), einer elektrisch isolierenden Bürstenbrücke (3) mit angeformtem Steckergehäuse (11), einer Leiterplatte (13) mit Steckfahnen 14, die durch Steckerausnehmungen der Bürstenbrücke (3) in das Steckergehäuse (11) hineinragen wobei die Bürstenbrücke (3) als Träger für die Leiterplatte (13) dient.

Aus der DE 43 15 404 A1 ist ein gattungsgemäßer elektrischer Antrieb bekannt, bei dem keine Kontaktierungsmöglichkeit für die Leiterplatte mit dem Lagerschild vorgesehen ist. DE 198 15 702 A1 offenbart einen elektrischen Antrieb mit einem Bürstenhalter, einer Leiterplatte und Hallsensoren, wobei die Hallsensoren elektrisch und mechanisch mit dem Bürstenhalter verbunden sind und die Bürstenhalter beidseitig Leiterbahnen aufweisen.

GB 2 140 218 A offenbart einen elektrischen Antrieb mit einer Bürstenvorrichtung und einem elektrisch leitfähigen Schild zum Abschirmen elektromagnetischer Strahlung.

Aufgabe der Erfindung ist es einen Elektrischen Antrieb darzustellen, der auf wirtschaftliche Weise sicher montiert und gehandhabt werden kann, bei dem viele elektrische und elektronische Bauteile bauraumsparend untergebracht werden und der gute Entstöreigenschaften aufweist.

Diese Aufgabe wird erfindungsgemäß dadurch gelöst, dass ein Sensor (23), mechanisch und elektrisch mit der Leiterplatte (13) verbunden ist, der Lagerschild (4) elektrisch leitfähig ist, die Leiterplatte (13) beidseitig Leiterbahnen aufweist, der Sensor (23) in einer Ausnehmung (25) der Leiterplatte (13) gehalten ist und eine Masseleiterbahn (27) der Leiterplatte (13) dem Lagerschild (4) zugewandt ist und mit diesem unmittelbar elektrisch kontaktiert und mechanisch befestigt ist. Durch das leitfähige Lagerschild in Nähe der Leiterplatte ist eine Massekontaktierung einfach herstellbar. Durch die beidseitig angeordneten Leiterbahnen und der Anordnung des Sensors in einer Ausnehmung der Leiterplatte, können mehr Bauteile bauraumsparend untergebracht werden. Durch die Kombination von mechanischer und elektrischer Verbindung ist eine einfache Montage der Leiterplatte möglich.

Weiterbildungen der Erfindung werden in den Unteransprüchen dargestellt. Indem die Leiterplatte (13) im Bereich ihrer elektrischen Verbindungsstelle mit dem Lagerschild (3) eine Befestigungsfreisparung (33) aufweist und mit dem Lagerschild (3) ein Anschraubdom (22) einstückig ist, über welchen die mechanische und elektrische Verbindung mit der Leiterplatte (13) hergestellt ist, ist eine besonders einfache Montage und elektrische Kontaktierbarkeit gegeben Zweckmäßigerweise ist vorgesehen dass die Bürstenbrücke (3) eine Bürstenbrückenausnehmung (34) aufweist, die mit der Befestigungsfreisparung (33) der Leiterplatte (13) korrespondiert und die Bürstenbrücke (3) sowie die Leiterplatte (13) mit derselben Montageschraube (21) an dem Anschraubdom (22) befestigt sind, dadurch können zwei Bauteile in einem Arbeitsgang montiert werden.

Eine gute Entstörwirkung ist bei kurzen Leiterverbindungen gegeben, dies wird hier dadurch erreicht, dass die elektrische Verbindung zwischen den Steckerfahnen und auf der Bürstenbrücke (3) in Bürstenköchern (19) axialbeweglich gelagerten Kohlebürsten (20) über Leiterbahnen der Leiterplatte (13) hergestellt ist, wobei Drosselspulen (35) einerseits diese Leiterbahnen unmittelbar elektrisch kontaktieren und andererseits mit Kohlelitzen (36) der Kohlebürsten (20) elektrisch verbunden sind.

Der Bauraum wird besonders gut ausgenutzt, indem die Leiterplatte (13) an drei Seiten mit elektrischen oder elektronischen Bauteilen bestückt ist.

Durch Anformung von der Leiterplatte (13) zugewandten Kontaktrippen (26) mit dem Anschraubdom (22), ist eine besonders sichere elektrische Masseverbindung möglich.

Bei der Montage von elektrischen Antrieben dürfen keine Bauteile beschädigt oder versehentlich demontierbar sein. Dies wird durch die Schutzeinrichtung gewährleistet, welche die sensiblen auslenkbaren Rastmittel so abschirmen, dass eine ungewollte Auslenkung kaum möglich ist.

Damit keine zusätzlichen Teile für die Schutzeinrichtung benötigt werden ist vorgesehen diese einstückig mit zumindest einem der miteinander zu verbindenden Bauteile auszubilden. Vorzugsweise wird die Schutzeinrichtung (6) durch Urformen mit zumindest einem der miteinander zu verbindenden Bauteile (3, 4) mitgeformt. Dies ist insbesondere bei Verwendung von Kunststoffspritzguss- oder ein Metalldruckgussteilen möglich.

Alternativ kann die Schutzeinrichtung auch durch Umformen mit zumindest einem der miteinander zu verbindenden Bauteile (3, 4) mitgeformt werden, z.B. wenn das entsprechende Bauteil ein Stanzbiegeteil ist.

Da die Schutzeinrichtung stabil und robust ausgeführt sein muss, um die gewünschten Anforderungen zu erfüllen, ist es zweckmäßig sie zusammen mit einem feststehenden Rastmittel am gleichen Bauteil einstückig auszubilden. Das feststehende Bauteil kann eine Rastnase sein oder auch aus mehreren Rastnasen oder aus einer Rastausnehmung bestehen.

Eine möglichst einfache Form der Schutzeinrichtung und damit wirtschaftlich herstellbar ist die Schutzeinrichtung (6) in Form einer Brücke (10), welche die zumindest eine Rastnase oder Rastausnehmung unter Beibehaltung eines Freiraums (8) überbrückt.

Damit bei Verwendung eines Urfomverfahrens eine Entformung wirtschaftlich möglich ist, ist in der brückenartigen Schutzeinrichtung (6) eine mit der zumindest einen Rastnase korrespondierende Freisparung (9) ausgenommen.

Weil das Bauteil (3,4), das zumindest ein auslenkbares Rastmittel (5) aufweist, elastisch sein muss ist vorgesehen dieses als einstückiges Kunststoffspritzgussteil auszuführen. Um dabei für eine ausreichende Festigkeit zu sorgen wird faserverstärktes Kunststoffmaterial verwendet.

Das auslenkbare Rastmittel (5) kann als zumindest eine Rastöse ausgebildet und hintergreift im montierten Zustand die zumindest eine Rastnase formschlüssig. Ebenso kann das auslenkbare Rastmittel (5) auch als zumindest eine Rastnase ausgebildet sein.

Besonders vorteilhaft ist es, wenn die Schutzeinrichtung (6) im montierten Zustand, eine größere Ausdehnung als das auslenkbare Rastmittel aufweist und zumindest im Bereich deren größten Auslenkbarkeit , also an ihrem Endbereich diese in Fügerichtung und/oder Auslenkrichtung überragt. So ist sichergestellt, dass stets die Schutzeinrichtung während der Handhabung oder Montage mit Wänden oder anderen Bauteilen in Berührung kommt und nicht das auslenkbare Rastmittel.

Das Bauteil (3, 4) mit dem auslenkbaren Rastmittel (5) kann beispielhaft mit einem Stecker oder Steckergehäuse (11) einstückig sein. Für beide Funktionen ist Kunststoffmaterial verwendbar, einerseits wegen seiner elastischen und andererseits wegen seiner isolierenden Eigenschaften.

Die Schnappverbindung kann dafür vorgesehen sein eine Dichtung (12), die zwischen den beiden miteinander zu verbindenden Bauteilen (3, 4) angeordnet ist und diese abdichtet, zusammenzudrücken. Dann ist es besonders wichtig eine sichere Verbindung zu gewährleisten.

Ein Ausführungsbeispiel der Erfindung wird nachfolgend anhand eines Ausführungsbeispiels näher erläutert. Es zeigen:
Fig.1 einen erste räumliche Ansicht eines elektrischen Antriebs,
Fig. 2 eine zweite räumliche Ansicht des elektrischen Antriebs,
Fig. 3 eine dritte räumliche Ansicht des elektrischen Antriebs,
Fig. 4 eine räumliche Darstellung eines als Bürstenbrücke ausgebildeten ersten Bauteils montiert an einem als Lagerschild ausgebildeten zweiten Bauteil,
Fig. 5 eine räumliche Darstellung des als Lagerschild ausgebildeten zweiten Bauteils,
Fig. 6 eine weitere räumliche Darstellung des zweiten Bauteils,
Fig. 7 eine räumliche Darstellung der Bürstenbrücke und
Fig. 8 u. 9 eine Leiterplatte.

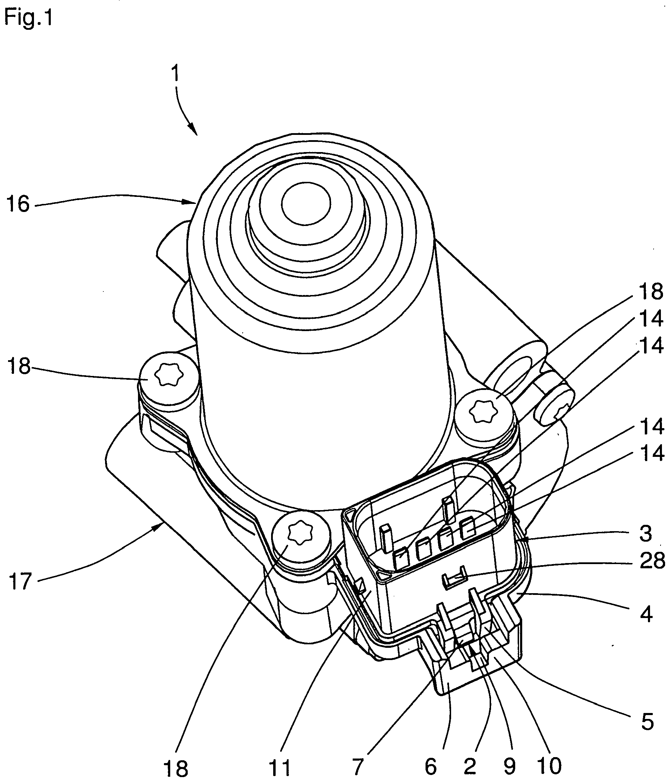

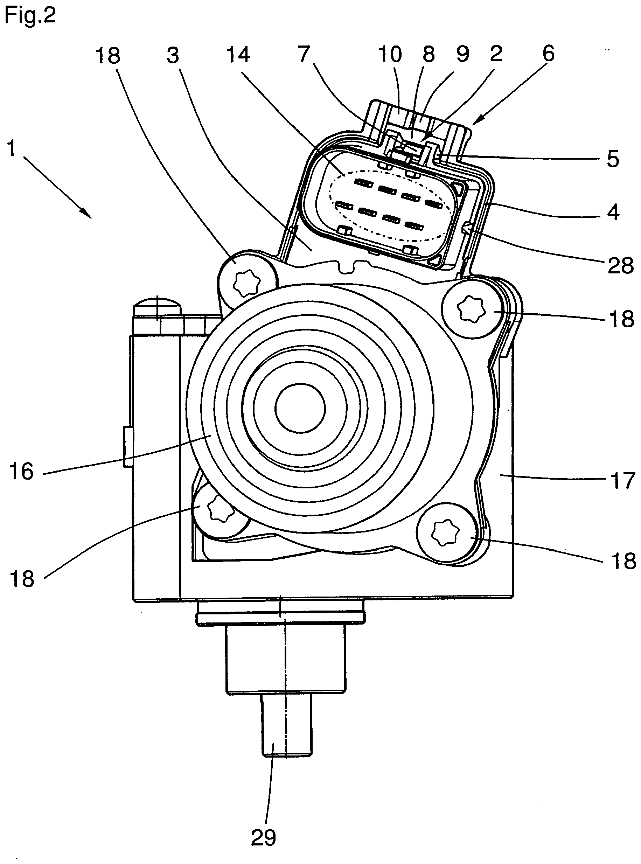

Fig.1 zeigt eine erste räumliche Ansicht eines elektrischen Antrieb 1, mit einem als Bürstenbrücke ausgebildeten ersten Bauteil 3, einem als Lagerschild ausgebildeten zweiten Bauteil 4. Die Bürstenbrücke ist zwischen dem Gehäuse 16 eines Elektromotors und dem Lagerschild 4 sandwichartig angeordnet, welches mit einem Getriebegehäuse 17 mechanisch verbunden ist. Das Motorgehäuse 16, die Bürstenbrücke 3, das Lagerschild 4 und das Getriebegehäuse 17 sind teilweise über Befestigungsschrauben 18 und im Bereich eines einstückig mit der Bürstenbrücke geformten Steckergehäuses 11 über eine Schnappverbindung 2 miteinander verbunden. Im Steckergehäuse sind Anschlussfahnen 14 angeordnet, die zum Anschluss des elektrischen Antriebs 1 an eine Versorgungsspannungsquelle dienen. Die Schnappverbindung 2 besteht aus einer lagerschildfesten Rastnase 7 und einer bürstenbrückenfesten Rastöse 5, welche auslenkbar ist und mit der Rastnase 7 verschnappt ist. Damit die Rastverbindung 2 nicht bei der Montage des elektrischen Antriebs oder seiner Handhabung unbeabsichtigt gelöst oder beschädigt wird ist eine Schutzeinrichtung 6 vorgesehen. Um die Auslenkung der Rastöse 5 zu ermöglichen ist die Schutzeinrichtung 6 mit einem Freiraum 8 versehen (Fig.2). Die Schutzeinrichtung 6 ist in Form einer Brücke 10 gebildet, die einstückig mit dem Lagerschild mitgeformt ist. Aus formtechnischen Gründen ist in der Brücke 10 eine mit der Rastnase 7 korrespondierende Freisparung (9) vorgesehen. Die Brücke ist so geformt, dass ihre Stützpfeiler zunächst radial aus der Bürstenbrücke 3 vorspringen und das Querjoch sich L-förmig in Axialrichtung erstreckt und die Rastöse 5 auf diese Weise überdeckt.

Fig. 2 zeigt eine zweite räumliche Ansicht des elektrischen Antriebs 1, mit der Bürstenbrücke 3, dem Lagerschild 4, dem Motorgehäuse 16, dem Getriebegehäuse 17 und einer Ausgangswelle 29. Hier ist die Schutzeinrichtung 6 mit dem Freiraum 8 zwischen der Brücke 10 und der Schnappverbindung 2 deutlicher erkennbar.

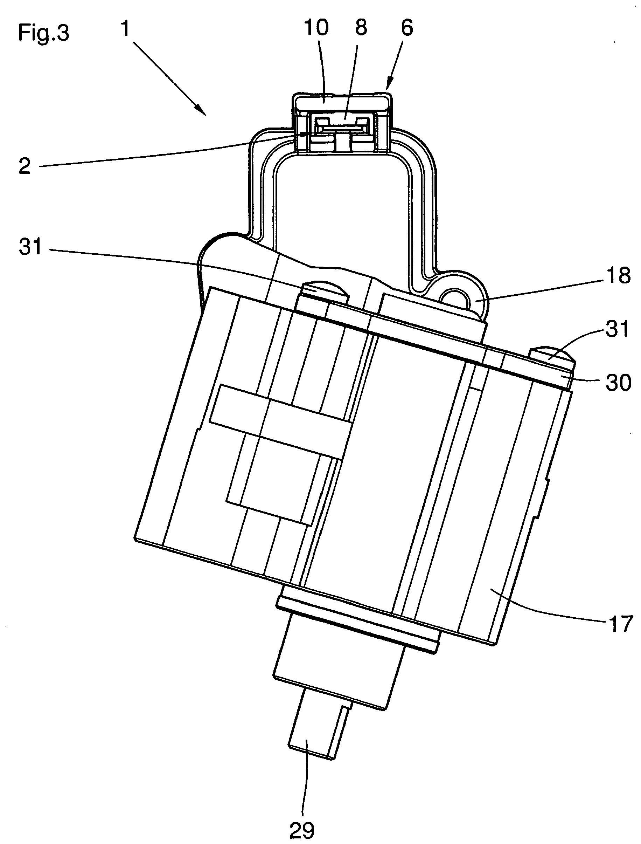

Fig. 3 zeigt eine dritte räumliche Ansicht des Elektrischen Antriebs 1, mit der Schutzeinrichtung 6 für die Schnappverbindung 2, dem Getriebegehäuse 17 mit einem Getriebegehäusedeckel 30, der mit Getriebegehäuseschrauben 31 am Getriebegehäuse 17 befestigt ist und der Ausgangswelle 29.

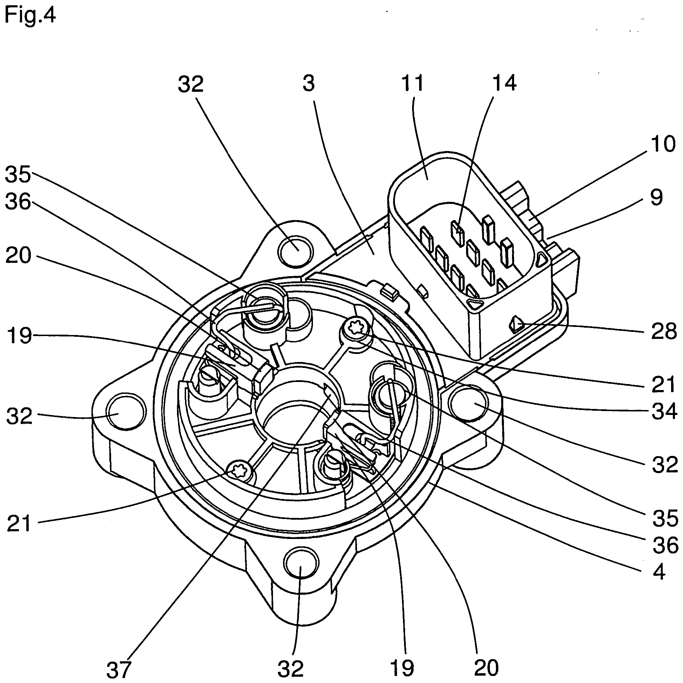

Fig. 4 zeigt eine erste räumliche Darstellung eines als Bürstenbrücke ausgebildeten ersten Bauteils 3 montiert an einem als Lagerschild ausgebildeten zweiten Bauteil 4, mit dem Steckergehäuse 11, den Steckfahnen 14, der Brücke 10 und der Freisparung 9. Die Bürstenbrücke 3 ist mittels Montageschrauben 21 am Lagerschild 4 befestigt und mit Bürstenköchern 19 versehen, die zur Führung von Kohlebürsten 20 dienen. Der Lagerschild 4 weist Befestigungsausnehmungen 32 zur Aufnahme der Befestigungsschrauben 18 auf. Die Bürstenbrücke 3 ist mit Drosselspulen 35 bestückt, die einerseits mit Kontaktpunkten 24 der Leiterplatte 13 und andererseits mit Kohlelitzen 36 elektrisch verbunden sind. In der Bürstenbrücke 3 ist eine Sensorfreisparung 37 vorgesehen, um den Sensor näher an ein auf der Motorwelle angeordnetes Polrad anordnen zu können.

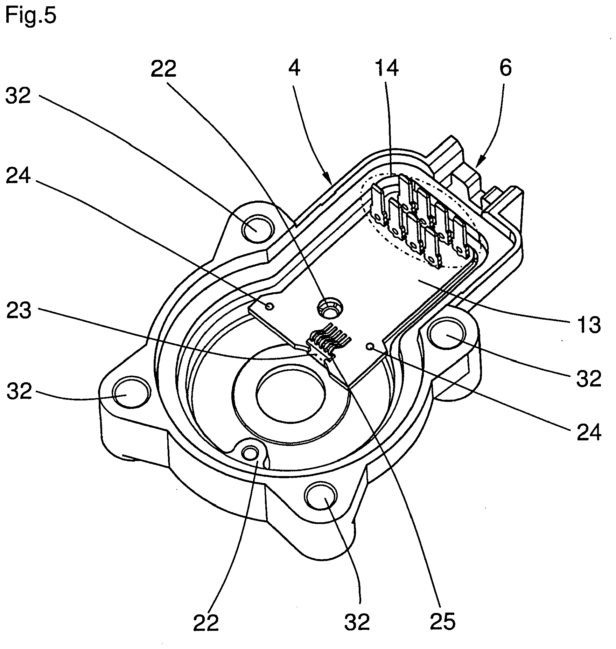

Fig. 5 zeigt eine räumliche Darstellung des als Lagerschild ausgebildeten zweiten Bauteils 4, das mit einer Leiterplatte 13 versehen ist, deren Masseleiterbahn elektrisch mit einem Anschraubdom 22 und damit mit dem Lagerschild verbunden ist. Die Leiterplatte dient zur elektrischen Verbindung der Steckfahnen 14 mit den Kohlebürsten (Kontaktpunkte 24) und einem Sensor 23, z.B. einem Hallsensor zur Detektierung des alternierenden Magnetfelds eines rotierenden Polrads (nicht dargestellt). Der Sensor 23 ist in eine Sensorausnehmung 25 der Leiterplatte 13 mechanisch befestigt. Der Sensor 23 ist an einer Stirnseite der Leiterplatte 13 angeordnet, welche somit auf drei Seiten mit Bauteilen bestückt ist.

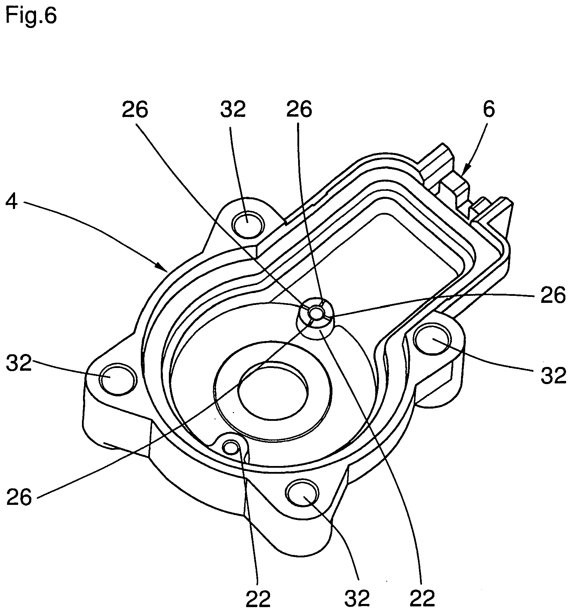

Fig. 6 zeigt eine weitere räumliche Darstellung des zweiten Bauteils 4 ohne Leiterplatte, wobei der Anschraubdom 22, der mit der Masseleiterbahn 27 der Leiterplatte 13 elektrisch verbunden ist mit der Leiterplatte 13 zugewandten vorspringenden Kontaktrippen 26 geformt ist. Ein Anschraubdom 22 dient zur Befestigung sowohl der Leiterplatte als auch der Bürstenbrücke und ein Anschraubdom 22 nur zur Befestigung der Bürstenbrücke 3.

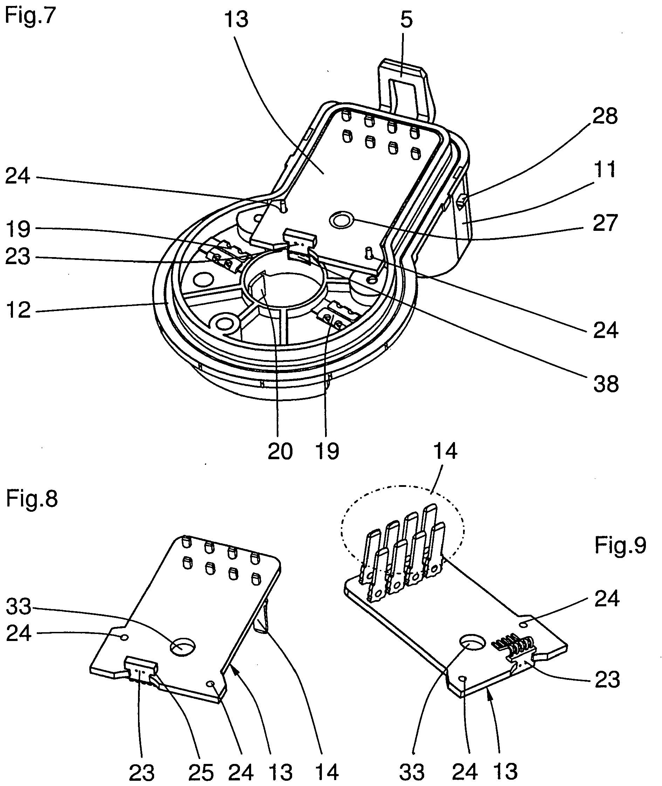

Fig. 7 zeigt eine räumliche Darstellung der Bürstenbrücke 3 mit Steckergehäuse 11, Schnappöse 5, Leiterplatte 13, Sensor 23, Masseleiterbahn 27, Kontaktpunkte 24, Bürstenköcher 19, Kohlebürsten 20 und Steckfahnen, die direkt mit der Leiterplatte 13 mechanisch und elektrisch verbunden sind. Das Steckergehäuse ist mit einem Rastmittel 28 geformt, das mit einem Gegenrastmittel in einem Zuleitungsstecker korrespondiert. In die Bürstenbrücke 3 ist eine umlaufende Dichtung 12 montiert, die den elektrischen Antrieb 1 gegenüber Umwelteinflüssen abdichtet. Die Schnappverbindung 2 dient dazu die Dichtwirkung der Dichtung 12 zu gewährleisten. Bei versehentlichem Lösen der Schnappverbindung 2 würde der elektrische Antrieb undicht werden.

Fig. 8 u. 9 zeigen die Leiterplatte 13, mit den Steckfahnen 14, dem Sensor 23, der in der Ausnehmung 25 mechanisch befestigt ist, den Kontaktstellen 24 und Befestigungsfreisparungen 33 für die Aufnahme der Montageschraube 21 und zur Befestigung am Anschraubdom 22.

### Bezugszeichenliste

- 1: elektrischer Antrieb
- 2: Schnappverbindung
- 3: Bürstenbrücke
- 4: Lagerschild
- 5: auslenkbares Rastmittel/Rastöse
- 6: Schutzeinrichtung
- 7: feststehendes Rastmittel/Rastnase
- 8: Freiraum
- 9: korrespondierende Freisparung
- 10: Brücke
- 11: Stecker/Steckergehäuse
- 12: Dichtung
- 13: Leiterplatte
- 14: Steckfahnen
- 15: Ausnehmung
- 16: Motorgehäuse
- 17: Getriebegehäuse
- 18: Befestigungsschraube
- 19: Bürstenköcher
- 20: Kohlebürste
- 21: Montageschraube
- 22: Anschraubdom
- 23: Sensor
- 24: Kontaktpunkt
- 25: Sensorausnehmung
- 26: Kontaktrippe
- 27: Masseleiterbahn
- 28: Rastmittel
- 29: Ausgangswelle
- 30: Getriebegehäusedeckel
- 31: Getriebegehäuseschrauben
- 32: Befestigungsausnehmungen
- 33: Befestigungsfreisparung
- 34: Bürstenbrückenausnehmung
- 35: Drosselspule
- 36: Kohlelitzen
- 37: Sensorfreisparung

## Patentansprüche

1. Elektrischer Antrieb (1), mit einem Motorgehäuse (16), einem Lagerschild (4), einer elektrisch isolierenden Bürstenbrücke (3) mit angeformtem Steckergehäuse (11), einer Leiterplatte (13) mit Steckfahnen 14, die durch Steckerausnehmungen der Bürstenbrücke (3) in das Steckergehäuse (11) hineinragen wobei die Bürstenbrücke (3) als Träger für die Leiterplatte (13) dient, **dadurch gekennzeichnet, dass** ein Sensor (23), mechanisch und elektrisch mit der Leiterplatte (13) verbunden ist, der Lagerschild (4) elektrisch leitfähig ist, die Leiterplatte (13) beidseitig Leiterbahnen aufweist, der Sensor (23) in einer Ausnehmung (25) der Leiterplatte (13) gehalten ist und eine Masseleiterbahn (27) der Leiterplatte (13) dem Lagerschild (4) zugewandt ist und mit diesem unmittelbar elektrisch kontaktiert und mechanisch befestigt ist.

2. Elektrischer Antrieb nach Anspruch 1, **dadurch gekennzeichnet, dass** die Leiterplatte (13) im Bereich ihrer elektrischen Verbindungsstelle mit dem Lagerschild (3) eine Befestigungsfreisparung (33) aufweist und mit dem Lagerschild (3) ein Anschraubdom (22) einstückig ist, über welchen die mechanische und elektrische Verbindung mit der Leiterplatte (13) hergestellt ist.

3. Elektrischer Antrieb nach Anspruch 2, **dadurch gekennzeichnet, dass** die Bürstenbrücke (3) eine Bürstenbrückenausnehmung (34) aufweist, die mit der Befestigungsfreisparung (33) der Leiterplatte (13) korrespondiert und die Bürstenbrücke (3) sowie die Leiterplatte (13) mit derselben Montageschraube (21) an dem Anschraubdom (22) befestigt sind.

4. Elektrischer Antrieb nach Anspruch 1, 2 oder 3, **dadurch gekennzeichnet, dass** die elektrische Verbindung zwischen den Steckerfahnen und auf der Bürstenbrücke (3) in Bürstenköchern (19) axialbeweglich gelagerten Kohlebürsten (20) über Leiterbahnen der Leiterplatte (13) hergestellt ist, wobei Drosselspulen (35) einerseits diese Leiterbahnen unmittelbar elektrisch kontaktieren und andererseits mit Kohlelitzen (36) der Kohlebürsten (20) elektrisch verbunden sind.

5. Elektrischer Antrieb nach Anspruch 1, 2 oder 3, **dadurch gekennzeichnet, dass** die Leiterplatte (13) an drei Seiten mit elektrischen oder elektronischen Bauteilen bestückt ist.

6. Elektrischer Antrieb nach Anspruch 2, 3, 4 oder 5, **dadurch gekennzeichnet, dass** mit dem Anschraubdom (22) vorspringende Kontaktrippen (26) angeformt sind, die der Leiterplatte (13) zugewandt sind.

7. Elektrischer Antrieb nach zumindest einem der vorangehenden Ansprüche, **dadurch gekennzeichnet, dass** der Lagerschild (4) und die Bürstenbrücke (3) über zumindest eine Schnappverbindung (2) mit einem auslenkbaren Rastmittel (5), das an einem äußeren Bereich des elektrischen Antriebs (1) vorspringend angeordnet ist, miteinander verbunden sind, wobei das auslenkbare Rastmittel (5) durch eine Schutzeinrichtung (6) gegen unbeabsichtigtes Auslenken des Rastmittels (5) und damit Lösen der Schnappverbindung (2) geschützt ist.

8. Elektrischer Antrieb nach Anspruch 7, **dadurch gekennzeichnet, dass** die Schutzeinrichtung (6) einstückig mit der Bürstenbrücke (3) und/oder dem Lagerschild (4) ist.

9. Elektrischer Antrieb nach Anspruch 7 und zumindest einem der vorangehenden Ansprüche, **dadurch gekennzeichnet, dass** die Schutzeinrichtung (6) durch Urformen mit der Bürstenbrücke (3) und/oder dem Lagerschild (4) mitgeformt ist.

10. Elektrischer Antrieb nach Anspruch 7 und zumindest einem der nachfolgenden Ansprüche, **dadurch gekennzeichnet, dass** die Bürstenbrücke (3) oder der Lagerschild (4) mit der Schutzeinrichtung (6) ein Kunststoffspritzguss- oder ein Metalldruckgussteil ist.

11. Elektrischer Antrieb nach Anspruch 7 und zumindest einem der nachfolgenden Ansprüche, **dadurch gekennzeichnet, dass** die Schutzeinrichtung durch Umformen mit der Bürstenbrücke (3) und/oder dem Lagerschild (4) mitgeformt ist.

12. Elektrischer Antrieb nach Anspruch 7 und zumindest einem der nachfolgenden Ansprüche, **dadurch gekennzeichnet, dass** die Bürstenbrücke (3) oder der Lagerschild (4) mit der Schutzeinrichtung (6) ein Stanzbiegeteil ist.

13. Elektrischer Antrieb nach Anspruch 7 und zumindest einem der nachfolgenden Ansprüche, **dadurch gekennzeichnet, dass** die Schutzeinrichtung (6) zusammen mit einem feststehenden Rastmittel (7) mit der Bürstenbrücke (3) und/oder dem Lagerschild (4) einstückig ist.

14. Elektrischer Antrieb nach Anspruch 7 und zumindest einem der nachfolgenden Ansprüche, **dadurch gekennzeichnet, dass** das feststehende Rastmittel (7) zumindest eine Rastnase oder eine Rastausnehmung ist.

15. Elektrischer Antrieb nach Anspruch 7 und zumindest einem der nachfolgenden Ansprüche, **dadurch gekennzeichnet, dass** die Schutzeinrichtung (6) in Form einer Brücke (10) ausgebildet ist, welche die zumindest eine Rastnase oder Rastausnehmung unter Beibehaltung eines Freiraums (8) überbrückt.

16. Elektrischer Antrieb nach Anspruch 7 und zumindest einem der nachfolgenden Ansprüche, **dadurch gekennzeichnet, dass** in der brückenartigen Schutzeinrichtung (6) eine mit der zumindest einen Rastnase korrespondierende Freisparung (9) ausgenommen ist.

17. Elektrischer Antrieb nach Anspruch 7 und zumindest einem der nachfolgenden Ansprüche, **dadurch gekennzeichnet, dass** die Bürstenbrücke (3) oder der Lagerschild (4), die bzw. der zumindest ein auslenkbares Rastmittel (5) aufweist, mit diesem ein einstückiges Kunststoffspritzgussteil bildet.

18. Elektrischer Antrieb nach Anspruch 7 und zumindest einem der nachfolgenden Ansprüche, **dadurch gekennzeichnet, dass** das Kunststoffspritzgussteil faserverstärkt ist.

19. Elektrischer Antrieb nach Anspruch 7 und zumindest einem der nachfolgenden Ansprüche, **dadurch gekennzeichnet, dass** das auslenkbare Rastmittel (5) als zumindest eine Rastöse ausgebildet ist und im montierten Zustand die zumindest eine Rastnase formschlüssig hintergreift.

20. Elektrischer Antrieb nach Anspruch 7 und zumindest einem der nachfolgenden Ansprüche, **dadurch gekennzeichnet, dass** das auslenkbare Rastmittel (5) als zumindest eine Rastnase ausgebildet ist.

21. Elektrischer Antrieb nach Anspruch 7 und zumindest einem der nachfolgenden Ansprüche, **dadurch gekennzeichnet, dass** die Schutzeinrichtung (6) im montierten Zustand, eine größere Ausdehnung als das auslenkbare Rastmittel aufweist und zumindest im Bereich deren größten Auslenkbarkeit, also an ihrem Endbereich diese in Fügerichtung und/oder Auslenkrichtung überragt.

22. Elektrischer Antrieb nach Anspruch 7 und zumindest einem der nachfolgenden Ansprüche, **dadurch gekennzeichnet, dass** die Bürstenbrücke (3) oder der Lagerschild (4) mit dem auslenkbaren Rastmittel (5) mit dem Stecker oder Steckergehäuse (11) einstückig ist.

23. Elektrischer Antrieb nach Anspruch 7 und zumindest einem der nachfolgenden Ansprüche, **dadurch gekennzeichnet, dass** eine Dichtung (12) zwischen der Bürstenbrücke (3) und dem Lagerschild (4) angeordnet ist und diese abdichtet, wobei die Schnappverbindung (2) die Dichtung (12) zwischen der Bürstenbrücke (3) und dem Lagerschild (4) andrückt.

## Claims

1. An electric drive (1) having a motor housing (16), an end shield (4), an electrically insulating brush yoke (3) with an integrally formed plug housing (11), a printed circuit board (13) having flat pins (14) which project through the plug openings of the brush yoke (3) into the plug housing (11), wherein the brush yoke (3) serves as a carrier for the printed circuit board (13), **characterised in that** a sensor (23) is mechanically and electrically connected to the printed circuit board (13), the end shield (4) is electrically conductive, the printed circuit board (13) has tracks on both sides, the sensor (23) is held in an opening (25) in the printed circuit board (13) and an earth track (27) of the printed circuit board (13) faces the end shield (4) and is in direct electrical contact therewith and mechanically fastened thereto.

2. An electric drive according to Claim 1, **characterised in that** the printed circuit board (13) has a fastening recess (33) in the region of its electrical connection point to the end shield (4) and a screw boss (22), by way of which the mechanical and electrical connection to the printed circuit board is produced, is formed in one piece with the end shield (4).

3. An electric drive according to Claim 2, **characterised in that** the brush yoke (3) has a brush yoke opening (34) which corresponds to the fastening recess (33) of the printed circuit board (13) and the brush yoke (3) and the printed circuit board (13) are fastened to the screw boss (22) by the same assembly screw (21).

4. An electric drive according to Claim 1, 2 or 3, **characterised in that** the electrical connection between the flat pins and carbon brushes mounted in an axially movable manner in brush holders on the brush yoke (3) is produced by way of tracks of the printed circuit board (13), wherein reactors (35) are in direct electrical contact with these tracks on the one hand and are electrically connected to carbon leads (36) of the carbon brushes (20) on the other.

5. An electric drive according to Claim 1, 2 or 3, **characterised in that** the printed circuit board (13) is equipped with electric or electronic components on three sides.

6. An electric drive according to Claim 2, 3, 4 or 5, **characterised in that** projecting contact ribs (26), which face the printed circuit board (13), are integrally formed with the screw boss (22).

7. An electric drive according to at least one of the preceding claims, **characterised in that** the end shield (4) and the brush yoke (3) are connected to one another by way of at least one snap connection (2) having a deflectable latching means (5) which is arranged in a projecting manner on an outer region of the electric drive (1), wherein the deflectable latching means (5) is protected against an unintentional deflection of the latching means (5), and thus a releasing of the snap connection (2), by means of a protective device (6).

8. An electric drive according to Claim 7, **characterised in that** the protective device (6) is formed in one piece with the brush yoke (3) and/or the end shield (4).

9. An electric drive according to Claim 7 and at least one of the preceding claims, **characterised in that** the protective device (6) is formed with the brush yoke (3) and/or the end shield (4) by a forming process.

10. An electric drive according to Claim 7 and at least one of the following claims, **characterised in that** the brush yoke (3) or the end shield (4) with the protective device (6) is a plastic injection moulded part or a metal injection moulded part.

11. An electric drive according to Claim 7 and at least one of the following claims, **characterised in that** the protective device is formed with the brush yoke (3) and/or the end shield (4) by a forming process.

12. An electric drive according to Claim 7 and at least one of the following claims, **characterized in that** the brush yoke (3) or the end shield (4) with the protective device (6) is a cut and bent part.

13. An electric drive according to Claim 7 and at least one of the following claims, **characterised in that** the protective device (6) together with a fixed latching means (7) is formed in one piece with the brush yoke (3) and/or the end shield (4).

14. An electric drive according to Claim 7 and at least one of the following claims, **characterised in that** the fixed latching means (7) is at least one latching lug or latching opening.

15. An electric drive according to Claim 7 and at least one of the following claims, **characterised in that** the protective device (6) is constructed in the form of a bridge (10) which bridges the at least one latching lug or latching opening whilst maintaining a clearance (8).

16. An electric drive according to Claim 7 and at least one of the following claims, **characterised in that** a recess (9) corresponding to the at least one latching lug is incorporated in the bridge-like protective device (6).

17. An electric drive according to Claim 7 and at least one of the following claims, **characterised in that** the brush yoke (3) or end shield (4), which has at least one deflectable latching means (5), forms a single-piece plastic injection moulded part with this latching means.

18. An electric drive according to Claim 7 and at least one of the following claims, **characterised in that** the plastic injection moulded part is fibre-reinforced.

19. An electric drive according to Claim 7 and at least one of the following claims, **characterised in that** the deflectable latching means (5) is constructed as at least one latching eye and reaches behind the at least one latching lug with form locking in the assembled state.

20. An electric drive according to Claim 7 and at least one of the following claims, **characterised in that** the deflectable latching means (5) is constructed as at least one latching lug.

21. An electric drive according to Claim 7 and at least one of the following claims, **characterised in that,** in the assembled state, the protective device (6) has a greater extent than the deflectable latching means and projects beyond this in the joining direction and/or deflecting direction, at least in the region of its greatest deflectability, i.e. at its end region.

22. An electric drive according to Claim 7 and at least one of the following claims, **characterised in that** the brush yoke (3) or the end shield (4) having the deflectable latching means (5) is formed in one piece with the plug or plug housing (11).

23. An electric drive according to Claim 7 and at least one of the following claims, **characterised in that** a seal (12) is arranged between the brush yoke (3) and the end shield (4) and seals these, wherein the snap connection (2) presses the seal (12) between the brush yoke (3) and the end shield (5).

## Revendications

1. Entraînement électrique (1) comprenant un carter moteur (16), un flasque de palier (4), une couronne de porte-balais (3) électriquement isolante et sur laquelle est formé un boitier de connecteur enfichable (11), une plaque de circuit imprimé (13) avec des fiches de connexion (14) qui, en passant à travers des ouvertures de connecteur de la couronne porte-balais (3), font saillie à l'intérieur du boitier de connecteur enfichable (11), la couronne porte-balais (3) servant de support pour la plaque de circuit imprimé (13),
**caractérisé en ce qu'**un détecteur (23) est relié mécaniquement et électriquement à la plaque de circuit imprimé (13), le flasque de palier (4) est électriquement conducteur, la plaque de circuit imprimé (13) présente des pistes conductrices sur ses deux faces, le détecteur (23) est maintenu dans un évidement (25) de la plaque de circuit imprimé (13), et une piste conductrice de masse (27) de la plaque de circuit imprimé (13) est dirigée vers le flasque de palier (4) et est directement en contact avec celui-ci et y est fixée mécaniquement.

2. Entraînement électrique selon la revendication 1,
**caractérisé en ce que** la plaque de circuit imprimé (13) présente dans la zone de son point de liaison électrique avec le flasque de palier (4), un dégagement de fixation (33), et avec le flasque de palier (4) est réalisé d'un seul tenant, un bossage de vissage (22) par l'intermédiaire duquel est réalisée la liaison mécanique et électrique avec la plaque de circuit imprimé (13).

3. Entraînement électrique selon la revendication 2,
**caractérisé en ce que** la couronne porte-balais (3) présente un évidement de couronne porte-balais (34), qui est en correspondance avec le dégagement de fixation (33) de la plaque de circuit imprimé (13), et la couronne porte-balais (3) ainsi que la plaque de circuit imprimé (13) sont fixées avec la même vis de montage (21) sur le bossage de vissage (22).

4. Entraînement électrique selon la revendication 1, 2 ou la revendication 3, **caractérisé en ce que** la liaison électrique entre les fiches de connecteur et des balais-charbon (20) montés axialement mobiles dans des porte-balais tubulaires (19) sur la couronne porte-balais (3), est réalisée par l'intermédiaire de pistes conductrices de la plaque de circuit imprimé (13), des bobines d'arrêt (35) étant d'une part en contact électrique direct avec ces pistes conductrices, et d'autre part reliées électriquement à des tresses de charbon (36) des balais-charbon (20).

5. Entraînement électrique selon la revendication 1, 2 ou la revendication 3, **caractérisé en ce que** la plaque de circuit imprimé (13) est équipée de composants électriques ou électroniques sur trois côtés.

6. Entraînement électrique selon la revendication 2,3, 4 ou la revendication 5, **caractérisé en ce que** sur le bossage de vissage (22) sont formées, en saillie de celui-ci, des nervures de contact (26), qui sont dirigées vers la plaque de circuit imprimé (13).

7. Entraînement électrique selon l'une au moins des revendications précédentes, **caractérisé en ce que** le flasque de palier (4) et la couronne porte-balais (3) sont reliés mutuellement par l'intermédiaire d'au moins une liaison par encliquetage (2) comprenant un moyen d'encliquetage (5) susceptible d'être dévié et qui est agencé dans une zone extérieure, en saillie, de l'entraînement électrique (1), le moyen d'encliquetage (5) susceptible d'être dévié étant protégé, par un dispositif de protection (6), à l'encontre d'une déviation intempestive du moyen d'encliquetage (5), et ainsi à l'encontre de l'interruption de la liaison par encliquetage (2).

8. Entraînement électrique selon la revendication 7, **caractérisé en ce que** le dispositif de protection (6) est d'un seul tenant avec la couronne porte-balais (3) et/ou le flasque de palier (4).

9. Entraînement électrique selon la revendication 7 et au moins l'une des revendications précédentes, **caractérisé en ce que** le dispositif de protection (6) est formé par moulage initial avec la couronne porte-balais (3) et/ou le flasque de palier (4).

10. Entraînement électrique selon la revendication 7 et au moins l'une des revendications suivantes, **caractérisé en ce que** la couronne porte-balais (3) ou le flasque de palier (4) avec le dispositif de protection (6), est une pièce de matière plastique moulée par injection ou une pièce de métal coulée sous pression.

11. Entraînement électrique selon la revendication 7 et au moins l'une des revendications suivantes, **caractérisé en ce que** le dispositif de protection est formé par une opération de formage avec la couronne porte-balais (3) et/ou le flasque de palier (4).

12. Entraînement électrique selon la revendication 7 et au moins l'une des revendications suivantes, **caractérisé en ce que** la couronne porte-balais (3) ou le flasque de palier (4) avec le dispositif de protection (6) est une pièce découpée par matriçage et pliée.

13. Entraînement électrique selon la revendication 7 et au moins l'une des revendications suivantes, **caractérisé en ce que** le dispositif de protection (6), en commun avec un moyen d'encliquetage (7) en position fixe, est d'un seul tenant avec la couronne porte-balais (3) et/ou le flasque de palier (4).

14. Entraînement électrique selon la revendication 7 et au moins l'une des revendications suivantes, **caractérisé en ce que** le moyen d'encliquetage (7) en position fixe est au moins un cran d'encliquetage ou un évidement d'encliquetage.

15. Entraînement électrique selon la revendication 7 et au moins l'une des revendications suivantes, **caractérisé en ce que** le dispositif de protection (6) est réalisé sous la forme d'un pontet (10), qui surmonte ledit au moins un cran d'encliquetage ou évidement d'encliquetage en ménageant un espace libre (8) par rapport à ceux-ci.

16. Entraînement électrique selon la revendication 7 et au moins l'une des revendications suivantes, **caractérisé en ce que** dans le dispositif de protection (6) en forme de pontet, est évidé un dégagement (9) correspondant au dit au moins un cran d'encliquetage.

17. Entraînement électrique selon la revendication 7 et au moins l'une des revendications suivantes, **caractérisé en ce que** la couronne porte-balais (3) ou le flasque de palier (4), qui présente au moins un moyen d'encliquetage (5) pouvant être dévié, forme avec celui-ci une pièce en matière plastique moulée par injection, d'un seul tenant.

18. Entraînement électrique selon la revendication 7 et au moins l'une des revendications suivantes, **caractérisé en ce que** la pièce en matière plastique moulée par injection est renforcée par des fibres.

19. Entraînement électrique selon la revendication 7 et au moins l'une des revendications suivantes, **caractérisé en ce que** le moyen d'encliquetage (5) pouvant être dévié est réalisé sous la forme d'au moins un anneau d'encliquetage, et, dans l'état monté, vient s'engager, par complémentarité de formes, en contre-dépouille derrière le cran d'encliquetage.

20. Entraînement électrique selon la revendication 7 et au moins l'une des revendications suivantes, **caractérisé en ce que** le moyen d'encliquetage (5) pouvant être dévié est réalisé sous la forme d'au moins un cran d'encliquetage.

21. Entraînement électrique selon la revendication 7 et au moins l'une des revendications suivantes, **caractérisé en ce que** le dispositif de protection (6) présente, dans l'état monté, une étendue plus grande que le moyen d'encliquetage pouvant être dévié, et dépasse de celui-ci, au moins dans la zone de sa possibilité de déviation la plus grande, c'est-à-dire au niveau de sa zone d'extrémité, dans la direction d'assemblage et/ou la direction de déviation.

22. Entraînement électrique selon la revendication 7 et au moins l'une des revendications suivantes, **caractérisé en ce que** la couronne porte-balais (3) ou le flasque de palier (4) avec le moyen d'encliquetage (5) pouvant être dévié, est d'un seul tenant avec le connecteur ou boitier de connecteur (11).

23. Entraînement électrique selon la revendication 7 et au moins l'une des revendications suivantes, **caractérisé en ce qu'**un joint d'étanchéité (12) est agencé entre la couronne porte-balais (3) et le flasque de palier (4) en assurant leur étanchéité, la liaison par encliquetage (2) pressant le joint d'étanchéité (12) entre la couronne porte-balais (3) et le flasque de palier (4).
